# EUROPEAN PATENT SPECIFICATION

(11) **EP 1 936 876 B1**
(45) Date of publication and mention of the grant of the patent: **07.12.2016**
(21) Application number: 06026183.1
(22) Date of filing: 18.12.2006
(51) Int. Cl.: H04L 12/18, H04L 12/701, H04L 12/771, H04N 21/658, H04N 21/6547, H04N 21/6408, H04N 21/6377, H04N 21/6405, H04N 21/238, H04N 21/24, H04N 21/262, H04N 21/426

(54) **Method and system for ensuring data exchange between a server system and a client system**
Verfahren und System zur Sicherstellung des Datenaustausches zwischen einem Serversystem und einem Client-System
Procédé et système assurant l'échange de données entre un système serveur et un système client

(43) Date of publication of application: 25.06.2008
(73) Proprietor: Nokia Solutions and Networks GmbH & Co. KG, 81541 Munich (DE)
(72) Inventor: Gunter Aerts, 3700 Tongeren (BE)
(74) Representative: Weidel, Gottfried

(56) References cited:
- US-A1- 2002 075 824
- US-A1- 2006 168 301
- US-A1- 2006 239 195

## Description

This invention relates to the field of data communication between a server system and a client system (for example a set top box) for electronic program guides and data services which are related to electronic program guides.

US 2006/0239195A1 describes a method of distributing a set of data, such as a software application update, to a plurality of nodes in a network, with a focus to computerized medical devices used in nurse call systems. According to the method, either a unicast mode or a multicast mode may be used to distribute the set of data over the network.

In order to send an electronic program guide from a server system to a set top box, present solutions use multicast to distribute the files of the program guide to the client systems of the end users. Some client systems are known that request the files via unicast in case they didn't receive it via multicast. Therefore these client systems are configured to download the files from a specific uniform resource locator (URL) which has to be stored statically in the client system.

The disadvantage of this solution is that the client system has to be configured in such a way that it knows which files it needs to receive. In case the location of the files of the electronic program guide on the server system changes, the client system does not know anymore where from to download the files. Additionally the client system can not receive any new kind of files, for example extensions of the electronic program guide or new services.

It is therefore an objective of the present invention to ensure data exchange between a server system and a client system.

This objective is achieved by means of the features of the independent claims.

A client system is comprised by a plurality of client systems which are connected to a server system. A first plurality of information items is multicasted from the server system to the plurality of client systems. A first identification of the first plurality of information items is stored in the server system. A second identification of a second plurality of information items which effectively were registered to have arrived at the client system is stored in the client system. A failure of the multicasting of at least one of the information items of the first plurality of information items is identified by comparing the first identification with the second identification. Said at least one of the information items of the first plurality of information items is then unicasted to the client system.

This way, data exchange between the server system and the client system can be ensured. For example, a failure in the multicasting of an information item can be corrected. In particular, in case there are any network nodes within the connection from the server system to the client system which are not enabled for multicasting, the information items can anyway be transmitted by unicast to the client system.

The first identification and the second identification can be sent to any suitable means for comparing them. However, in a preferred embodiment, in order to minimize data traffic, the second identification is sent to the server system, and the comparing of the identification is performed by the server system.

In another preferred embodiment, the first identification and/or the second identification is a list of identifiers, whereas each identifier identifies an information item.

In another preferred embodiment, an information item is a data file, a group of data files, a message, or a group of messages, a data packet, a group of data packet, a cell, a group of cells, a frame and/or a group of frames.

In another preferred embodiment, the multicasting of the first plurality of information items is performed by IP-multicasting. This can be done by sending the first plurality of information items to an IP-multicast-address to which the client system has subscribed.

In another preferred embodiment, the unicasting of said at least one of the information items is performed by IP-unicasting. In order to unicast the information item to the client system, the server system needs to know an IP-address of the client system. This is automatically the case, if the server system also administrates the IP-address of the client system. If the server system is not responsible for the administration of IP-adresses, the client system can for example send its IP-address to the server system. This can for example be sent together with the second identification. If the IP-address of the client system is assigned dynamically, as is for example the case if Dynamic Host Configuration Protocol (DHCP) is used, it is advantageous to send the IP-address together with the MAC-address of the client system to the server system, each time the client system is assigned a new IP-address. This way, the server system can keep track of the IP-address, even if the client system is assigned a new IP-address.

In a preferred embodiment, is used to ensure the delivery of an electronic program guide for television programs to the end customers. In that case the client system comprises a set top box and the plurality of information items is the electronic program guide or a group of entries of the electronic program guide.

The invention and its advantages is in the following described based on the figure:

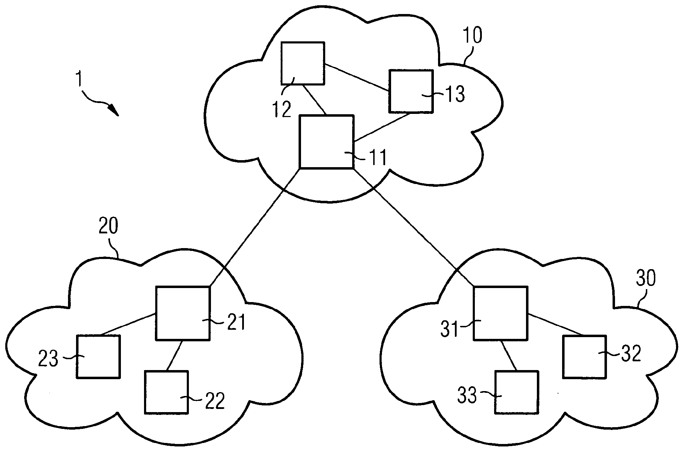

- Figure 1: shows a data network that is adapted for carrying out the invention.

Figure 1 shows a data network 1, which comprises a server system 10 and two access networks 20, 30.

The server system 10 comprises a router 11, a repository server 12 and a messaging server 13. The repository server 12 comprises means for storing information items, in this example files of an electronic program guide for television programs, which are updated on the repository server 12 on a regular or irregular time basis. The messaging server 13 is responsible for administrating the delivery of updated information items from the repository server 12 to the client systems 22, 23, 32, 33.

The access network 20 comprises a DSLAM 21 which is not multicast enabled and client systems 22, 23 which are connected to the DSLAM 21. The access network 30 comprises a DSLAM 31 which is multicast enabled and client systems 32, 33 which are connected to the DSLAM 31. The DSLAMs 21, 31 are connected to the router 11, for example via broadband netowork gateways (not shown) and the internet.

The invention will in the following be described on the example of delivering an updated electronic program guide to the client systems 22, 23, 32, 33. In this example a client system 22, 23, 32, 33 comprises a set top box (not shown), which is adapted to display the electronic program guide on a television display. In order to deliver the information items to a large number of client systems 22, 23, 32, 33, the updated files of the EPG are multicasted from the repository server 12 via the router 11. That means, that the updated files are sent out from the router 11 to a multicast address, eg. an IP multicast address.

Then, in the messaging server 13, a first list which identifies the multicasted files is stored. Additionally, upon arrival in the client system 22, 23, 32, 33, for each client system a second list is generated and stored, identifying the files which effectively were registered to have arrived at the client system 22, 23, 32, 33. As a consequence, in case no error happened during transmission, the client systems 32, 33 attached to the multicast enabled DSLAM 31, generate a second list that is identical or logically identical to the first list. On the other hand, the client systems 22, 23 attached to the DSLAM 21, which is not multicast enabled, generate each a second list that is empty.

Each client system 22, 23, 32, 33, then sends its second list to the messaging server, where each of the second lists is compared with the first list. Due to the comparison, the messaging server notices that the multicasting of the files to the client systems 32, 33 was completed correctly, while no files have arrived at the client systems 22, 23. The lacking files are then sent by unicast to the client systems 22, 23.

In case a failure happens in multicasting one of the files to the client systems 32, 33, this will also be notified by the server system 10. The failed file is subsequently unicasted to the respective client system 32, 33.

In order to multicast an information item to a client system 32, 33, the messaging server 13 and the repository server 12 provide the delivery of announcements and files over multicast and unicast. An announcement is a message that notifies a client system of an event, for example to join a multicast channel or to download an information item via unicast. For unicast, a download location which contains an X-URL (Uniform Resource Locator) of the information item can be included in the announcement. The X-URL refers to a file or another information item on the repository server 12. This allows a client system 22, 23, 32, 33 to fall back on unicast download in case multicast download fails.

In order to send an announcement to a client system which is located in a network that is not multicast enabled, the announcement can be directly triggered by the messaging server 13 and sent via unicast to the client system. The announcement preferably contains an X-URL of the information item that is to be downloaded. Alternatively, the messaging server can be polled by the client system for announcements. The polling can for example be performed at certain times as specified by the messaging server on the last poll or on a regular or other predetermined time basis. Additionally to the lacking files, the polling can also trigger the messaging server to push the messages that were not yet received. However, time critical messages are preferably pushed immediately to the client.

In another preferred embodiment, the method as well as the server system 10 is designed such that the timing of the unicasting of information items is well distributed over time, such that an overload of the server system 10 and/or access networks 20, 30 is prevented.

### List of reference signs

- 1: data network
- 10: server system
- 11: router
- 12: repository server
- 13: messaging server
- 20: access network
- 21: digital subscriber line access multiplexer, DSLAM
- 22: client system
- 23: client system
- 30: access network
- 31: digital subscriber line access multiplexer, DSLAM
- 32: client system
- 33: client system

## Claims

1. A method for ensuring data exchange between a server system (10) and a client system (22, 23, 32, 33), whereas said client system (22, 23, 32, 33) is comprised by a plurality of client systems (22, 23, 32, 33) connected to the server system (10), the method comprising the steps of:
- multicasting a first plurality of information items from the server system (10) to the plurality of client systems (22, 23, 32, 33);
- storing in the server system (10) a first identification of the first plurality of information items;
- storing in the client system (22, 23, 32, 33) a second identification of a second plurality of information items which effectively were registered to have arrived at the client system (22, 23, 32, 33);
- sending the second identification to the server system (10);
- identifying a failure of the multicasting of at least one of the information items of the first plurality of information items by comparing the first identification with the second identification, whereas the comparing of the first identification and the second identification is performed by the server system (10);
- unicasting said at least one of the information items of the first plurality of information items to the client system (22, 23, 32, 33).

2. The method of claim 1,
**characterized in that**
the first identification and/or the second identification is a list of identifiers, whereas each identifier identifies an information item.

3. The method of any one of the preceding claims,
**characterized in that**
an information item is a data file, a group of data files, a data packet, a group of data packet, a cell, a group of cells, a frame and/or a group of frames.

4. Method of any one of the preceding claims,
**characterized in that**
the multicasting of the first plurality of information items is performed by IP-multicasting.

5. Method of any one of the preceding claims,
**characterized in that**
the unicasting of said at least one of the information items is performed by IP-unicasting.

6. Method of any one of the preceding claims,
**characterized in that**
a third identification, which identifies the client system within the plurality of client systems (22, 23, 32, 33), is transmitted from the client system (22, 23, 32, 33) to the server system (10).

7. Method according to claim 6,
**characterized in that**
the third identification is an IP-address and/or a MAC-address of the client system (22, 23, 32, 33).

8. Method according to claim 7,
**characterized in that**
the IP-address is assigned dynamically to the client system (22, 23, 32, 33), whereas the server system (10) keeps track of the dynamically assigned IP-address.

9. Method of any one of the preceding claims,
**characterized in that**
the client system (22, 23, 32, 33) comprises a set top box and the plurality of information items is an electronic program guide or a group of entries of an electronic program guide.

10. A server system (10), that is adapted to perform the method of any one of the preceding claims.

11. A network (10), that is adapted to perform the method of any one of the preceding claims.

## Patentansprüche

1. Verfahren zur Sicherstellung eines Datenaustausches zwischen einem Serversystem (10) und einem Clientsystem (22, 23, 32, 33), wobei das Clientsystem (22, 23, 32, 33) von einer Mehrzahl von Clientsystemen (22, 23, 32, 33) umfasst wird, die mit dem Serversystem (10) verbunden sind, wobei das Verfahren die folgenden Schritte umfasst:
- Multicasting einer ersten Mehrzahl von Informationselementen von dem Serversystem (10) an die Mehrzahl von Clientsystemen (22, 23, 32, 33);
- Speichern einer ersten Kennzeichnung der ersten Mehrzahl von Informationselementen auf dem Serversystem (10);
- Speichern einer zweiten Kennzeichnung einer zweiten Mehrzahl von Informationselementen im Clientsystem (22, 23, 32, 33), die effektiv als bei dem Clientsystem (22, 23, 32, 33) eingegangen registriert wurden;
- Senden der zweiten Kennzeichnung an das Serversystem (10);
- Identifizieren eines Fehlers des Multicastings wenigstens eines der Informationselemente der ersten Mehrzahl von Informationselementen durch Vergleich der ersten Kennzeichnung mit der zweiten Kennzeichnung, wobei der Vergleich der ersten Kennzeichnung und der zweiten Kennzeichnung von dem Serversystem (10) ausgeführt wird;
- Unicasting des wenigstens einen Informationselements der ersten Mehrzahl von Informationselementen an das Clientsystem (22, 23, 32, 33).

2. Verfahren nach Anspruch 1,
**dadurch gekennzeichnet, dass**
die erste Kennzeichnung und/oder die zweite Kennzeichnung eine Liste von Kennungen ist, wobei jede Kennung ein Informationselement identifiziert.

3. Verfahren nach einem der vorstehenden Ansprüche,
**dadurch gekennzeichnet, dass**
ein Informationselement eine Datendatei, eine Gruppe von Datendateien, ein Datenpaket, eine Gruppe von Datenpaketen, eine Zelle, eine Gruppe von Zellen, ein Rahmen und/oder eine Gruppe von Rahmen ist.

4. Verfahren nach einem der vorstehenden Ansprüche,
**dadurch gekennzeichnet, dass**
das Multicasting der ersten Mehrzahl von Informationselementen per IP-Multicasting ausgeführt wird.

5. Verfahren nach einem der vorstehenden Ansprüche,
**dadurch gekennzeichnet, dass**
das Unicasting des wenigstens einen der Informationselemente per IP-Unicasting durchgeführt wird.

6. Verfahren nach einem der vorstehenden Ansprüche,
**dadurch gekennzeichnet, dass**
eine dritte Kennzeichnung, die das Clientsystem innerhalb der mehreren Clientsysteme (22, 23, 32, 33) identifiziert, vom Clientsystem (22, 23, 32, 33) an das Serversystem (10) gesendet wird.

7. Verfahren gemäß Anspruch 6,
**dadurch gekennzeichnet, dass**
die dritte Kennzeichnung eine IP-Adresse und/oder eine MAC-Adresse des Clientsystems (22, 23, 32, 33) ist.

8. Verfahren gemäß Anspruch 7,
**dadurch gekennzeichnet, dass**
die IP-Adresse dem Clientsystem (22, 23, 32, 33) dynamisch zugewiesen wird, wobei das Serversystem (10) die dynamisch zugewiesene IP-Adresse nachverfolgt.

9. Verfahren nach einem der vorstehenden Ansprüche,
**dadurch gekennzeichnet, dass**
das Clientsystem (22, 23, 32, 33) eine Set-Top-Box umfasst und die Mehrzahl von Informationselementen ein elektronischer Programmführer oder eine Gruppe von Einträgen in einem elektronischen Programmführer ist.

10. Serversystem (10), das dafür ausgelegt ist, das Verfahren nach einem der vorstehenden Ansprüche auszuführen.

11. Netz(10), das dafür ausgelegt ist, das Verfahren nach einem der vorstehenden Ansprüche auszuführen.

## Revendications

1. Un procédé visant à assurer un échange de données entre un système serveur (10) et un système client (22, 23, 32, 33), dans lequel ledit système client (22, 23, 32, 33) se compose d'une pluralité de systèmes clients (22, 23, 32, 33) raccordés au système serveur (10), le procédé comprenant les étapes suivantes :
- la multidiffusion d'une première pluralité d'éléments d'information du système serveur (10) vers la pluralité de systèmes clients (22, 23, 32, 33);
- la conservation en mémoire dans le système serveur (10) d'une première identification de la première pluralité d'éléments d'information;
- la conservation en mémoire dans le système client (22, 23, 32, 33) d'une deuxième identification d'une deuxième pluralité d'éléments d'information qui ont effectivement été enregistrés comme étant arrivés au niveau du système client (22, 23, 32, 33);
- l'envoi de la deuxième identification au système serveur (10);
- l'identification d'un échec de la multidiffusion d'au moins un des éléments d'information de la première pluralité d'éléments d'information par la comparaison de la première identification à la deuxième identification, la comparaison de la première identification et de la deuxième identification étant exécutée par le système serveur (10);
- la monodiffusion dudit au moins un des éléments d'information de la première pluralité d'éléments d'information vers le système client (22, 23, 32, 33).

2. Le procédé selon la revendication 1,
**caractérisé en ce que**
la première identification et/ou la deuxième identification est une liste d'identifiants, dans laquelle chaque identifiant identifie un élément d'information.

3. Le procédé selon l'une quelconque des revendications précédentes,
**caractérisé en ce que**
un élément d'information est un fichier de données, un groupe de fichiers de données, un paquet de données, un groupe de paquets de données, une cellule, un groupe de cellules, une trame et/ou un groupe de trames.

4. Le procédé selon l'une quelconque des revendications précédentes,
**caractérisé en ce que**
la multidiffusion de la première pluralité d'éléments d'information est exécutée par une multidiffusion IP.

5. Le procédé selon l'une quelconque des revendications précédentes,
**caractérisé en ce que**
la monodiffusion dudit au moins un des éléments d'information est exécutée par une monodiffusion IP.

6. Le procédé selon l'une quelconque des revendications précédentes,
**caractérisé en ce que**
une troisième identification, qui identifie le système client à l'intérieur de la pluralité de systèmes clients (22, 23, 32, 33), est transmise du système client (22, 23, 32, 33) au système serveur (10).

7. Le procédé selon la revendication 6,
**caractérisé en ce que**
la troisième identification est une adresse IP et/ou une adresse MAC du système client (22, 23, 32, 33).

8. Le procédé selon la revendication 7,
**caractérisé en ce que**
l'adresse IP est attribuée dynamiquement au système client (22, 23, 32, 33), le système serveur (10) effectuant le suivi de l'adresse IP attribuée dynamiquement.

9. Le procédé selon l'une quelconque des revendications précédentes,
**caractérisé en ce que**
le système client (22, 23, 32, 33) comprend un décodeur et la pluralité d'éléments d'information est un guide de programmes électronique ou un groupe d'entrées d'un guide de programmes électronique.

10. Un système serveur (10) qui est adapté de façon à exécuter le procédé selon l'une quelconque des revendications précédentes.

11. Un réseau (10) qui est adapté de façon à exécuter le procédé selon l'une quelconque des revendications précédentes.
